# FASCICULE DE BREVET EUROPEEN

(11) **EP 0 541 431 B1**
(45) Date de publication et mention de la délivrance du brevet: **22.07.1998**
(21) Numéro de dépôt: 92402964.8
(22) Date de dépôt: 30.10.1992
(51) Int. Cl.: H04L 7/033

(54) **Méthode et dispositif pour restituer un signal d'horloge rythmant la transmission de signaux reçus**
Anordnung und Verfahren für die Wiederherstellung eines Taktsignales, angewendet bei der Übertragung von empfangenen Signalen
Method and circuit for reproducing a clock signal, clocking the transmission of the received signals

(30) Priorité: 06.11.1991 FR 9113770
(43) Date de publication de la demande: 12.05.1993
(73) Titulaire: INSTITUT FRANCAIS DU PETROLE, 92502 Rueil-Malmaison (FR)
(72) Inventeur: Coquerel, Patrick, F-78500 Sartrouville (FR)

(56) Documents cités:
- EP-A- 0 198 701
- US-A- 3 746 800
- US-A- 4 031 478

## Description

La présente invention concerne un procédé et un dispositif pour restituer à partir de signaux captés sur une voie de transmission quelconque, un signal d'horloge rythmant la transmission sur cette voie de données numérisées et codées.

L'invention peut être utilisée dans les systèmes de transmission à codage bipolaire tel que le code HDB3 mais elle trouve sa pleine justification dans les systèmes de transmission simultanée de plusieurs éléments d'information tels que les systèmes de transmission multi-niveaux.

Dans ce type de transmission, les données numérisées à transmettre sont codées à partir d'un nombre défini de tensions électriques différentes d'amplitude constante. On choisit par exemple 4, 8, 16 ou 32 tensions de codage symétriques deux à deux de part et d'autre de la tension 0 volt. Ainsi, avec 2ⁿ, on peut transmettre n bits simultanément et augmenter ainsi le débit de transmission d'une voie de transmission. Une application de transmission sur un câble utilisant un codage multi-niveaux, est décrite par exemple dans la demande de brevet français EN 91/05375.

Un procédé connu pour restituer un signal d'horloge rythmant une transmission codée, consiste à appliquer les signaux codés à une boucle à asservissement de fréquence et de phase. Le signal reçu est mélangé par exemple à un signal engendré par un oscillateur local commandé par une tension électrique (VCO) (ou un signal dérivé), et la composante de basse fréquence extraite du signal combiné est appliqué sur une entrée de commande de l'oscillateur local qui se verrouille sur la fréquence du signal reçu (ou sur une fréquence proportionnelle) après un temps de calage plus ou moins long suivant l'écart initial. Le signal d'horloge rythmant la transmission étant restitué par ce calage de la boucle, il est possible de positionner précisément une fenêtre de mesure du niveau de la tension électrique reçue entre deux transitions successives des signaux codés reçus. On évite ainsi les erreurs sur la détermination des niveaux qui peuvent se produire quand une fenêtre de mesure mal centrée vient à déborder sur un intervalle de temps de transition, et donc les erreurs sur le signal codé effectivement reçu. La reconnaissance du niveau reçu doit être d'autant plus rigoureuse que l'écart entre les niveaux de tension possibles à reconnaître est plus petit du fait de l'augmentation du nombre des niveaux de codage employé. Il faut donc positionner avec beaucoup de précision les fenêtres de détection et donc obtenir pour cela une restitution parfaite en fréquence et en phase du signal d'horloge afin de synchroniser une horloge locale.

Par le brevet US-A-4,031,478, on connaît un dispositif permettant de caler une boucle de verrouillage de phase sur un signal d'entrée. Il comporte un comparateur de phase qui fonctionne par comparaison d'un signal d'horloge et du signal d'horloge décalé de 1/4 bit par rapport au front montant d'un signal de donnée. Cette comparaison produit des mots de deux bits. Un traitement de ces mots logiques à deux bits, adapté à coder la comparaison au moyen d'un ensemble de règles logiques contenues dans une mémoire ROM, permet de produire un signal d'erreur de fréquence et de phase, tenant compte du sens de l'erreur constatée.

Par le brevet EP-A-198 701, on connaît un dispositif comparateur de phase analogue. Il détecte des écarts de phase entre celle d'un signal d'entrée rythmé par un signal d'horloge et une horloge de référence. Il comporte un convertisseur analogique-numérique qui échantillonne le signal reçu à la fréquence du signal d'horloge local et produit des mots numériques de K bits, et un circuit à retard qui procède à l'échantillonnage du même signal reçu à une fréquence double de celle du signal d'horloge. Une multiplication des mots numériques obtenus dans les deux cas (par un ou-exclusif). produit des données représentatives des variations de phase entre le signal d'entrée et le signal d'horloge.

Le procédé selon l'invention a donc pour objet une restitution exacte à partir de signaux captés sur une voie de transmission, d'un signal d'horloge de période T rythmant la transmission sur celle-ci de données numérisées et codées, par une détection précise des instants de transition successifs de signaux codés reçus dans le but de mettre en phase une horloge locale.

Il est caractérisé en ce qu'elle comporte :
- un échantillonnage des signaux codés reçus durant des intervalles de temps incluant chacun au moins une transition entre deux niveaux différents des signaux codés reçus, et à une fréquence suffisante imposée par l'horloge locale et très supérieure à celle du signal d'horloge pour disposer d'un nombre déterminé d'échantillons successifs des signaux reçus;
- une détermination des écarts de niveau entre tous les échantillons successifs obtenus;
- une comparaison de l'ensemble desdits écarts de niveau obtenus au cours de chaque intervalles de temps (D) et une liste de mots binaires prédéterminés, chacun de ces mots binaires correspondant à une configuration-type d'écarts déterminée indicative de la qualité du centrage de la transition échantillonnée par rapport à l'intervalle de temps (D), et si l'ensemble des écarts ne correspond pas à une configuration d'écart de cette liste;
- une correction de la fréquence ou de la phase de l'horloge locale, de façon à rétablir une similitude avec une configuration d'écarts de la liste lors d'une transition ultérieure.

L'étape de comparaison de l'ensemble des écarts avec la liste de configuration d'écarts est effectuée en associant par exemple à chaque ensemble d'écarts de niveau obtenu, des signaux indicatifs de la correction éventuelle à apporter à la fréquence ou la phase de l'horloge locale.

Le procédé comporte par exemple un codage binaire des écarts après comparaison avec une amplitude-seuil.

Le dispositif permettant de restituer un signal d'horloge rythmant la transmission de signaux captés et de mettre en phase une horloge locale, en accord avec le procédé, comporte des moyens d'adaptation du niveau des signaux reçus sur une voie de transmission, des moyens d'échantillonnage des signaux reçus durant des intervalles de temps incluant chacun au moins une transition entre des niveaux différents des signaux codés reçus à une fréquence imposée par l'horloge locale et très supérieure à celle du signal d'horloge pour disposer d'une pluralité d'échantillons successifs des signaux reçus, des moyens pour déterminer les écarts de niveau les uns par rapport aux autres des échantillons prélevés durant chacun desdits intervalles de temps et constituer avec chacun d'eux un ensemble de valeurs d'écarts, et des moyens de comparaison de chaque ensemble d'écarts de niveau avec une liste de mots binaires prédéterminés indicative de la qualité de centrage de la transition échantillonnée, comprenant des moyens de mémorisation pour associer à chaque ensemble des valeurs d'écart obtenu, des signaux indicatifs de la correction à appliquer à l'horloge locale pour rétablir la synchronisation avec le signal d'horloge.

Les moyens d'échantillonnage sont adaptés de préférence à délivrer des mots numériques, lesdits moyens pour déterminer les écarts, comportent deux registres adaptés à contenir les mots numériques successifs, des moyens de comparaison deux à deux des mots numériques successifs contenus dans les deux registres, et des moyens de mémorisation des écarts pour contenir lesdits ensembles d'écarts.

Les moyens de comparaison sont adaptés par exemple à comparer chaque écart à un écart seuil.

On peut utiliser des moyens de mémorisation comportant une mémoire pour des mots numériques représentatifs de corrections à appliquer à l'horloge locale, cette mémoire étant pourvue d'entrées reliées aux moyens de mémorisation des écarts, ainsi qu'une horloge locale comportant un oscillateur à haute fréquence, des premiers moyens diviseurs de fréquence pour diviser la fréquence du signal de l'oscillateur par plusieurs facteurs différents autour d'une valeur centrale, et sélectionner l'un des facteurs en fonction desdits signaux de correction (CRₒ, CR₁) reçus des moyens de décodage (20), et des deuxièmes moyens diviseurs connectés aux premiers moyens diviseurs pour engendrer un premier signal à la même fréquence (fₒ) que le signal d'horloge reçu et un signal de synchronisation à une fréquence (Fₒ) multiple de celle du premier signal.

Les moyens d'échantillonnage peuvent comporter un convertisseur analogique-numérique.

On choisit par exemple la fréquence (Fₒ) dudit signal de synchronisation pour obtenir un nombre 2ⁿ d'échantillons durant une transition et on utilise des moyens d'échantillonnage adaptés à délivrer des mots numériques de n bits pour chacun d'eux.

D'autres caractéristiques et avantages du procédé et du dispositif selon l'invention apparaîtront mieux à la lecture de la description ci-après d'un mode de réalisation décrit à titre d'exemple non limitatif, en se référant aux dessins annexés où :
- la Fig.1 montre deux exemples de signaux à niveaux multiples reçus sur une voie de transmission et plus ou moins déformés par la transmission;
- la Fig.2 montre un intervalle de temps d'échantillonnage correctement placé par rapport à une portion particulière de signal reçu, dans le cas où l'horloge locale est bien synchrone avec le signal d'horloge rythmant un signal reçu;
- la Fig.3 montre un mot numérique traduisant les écarts de niveau entre les échantillons prélevés, dans le cas de la Fig.2;
- les Fig. 4 et 5 sont analogues aux Fig. 2 et 3 et elles correspondent au cas où l'intervalle de temps d'échantillonnage est mal centré du fait d'une désynchronisation de l'horloge locale;
- les Fig. 6 et 7 correspondent au cas où l'on choisit une fenêtre d'échantillonnage à cheval sur une transition du signal et le mot numérique correspondant obtenu;
- la Fig.8 montre schématiquement le dispositif selon l'invention; et
- la Fig.9 montre plus en détail le schéma de la Fig.8.

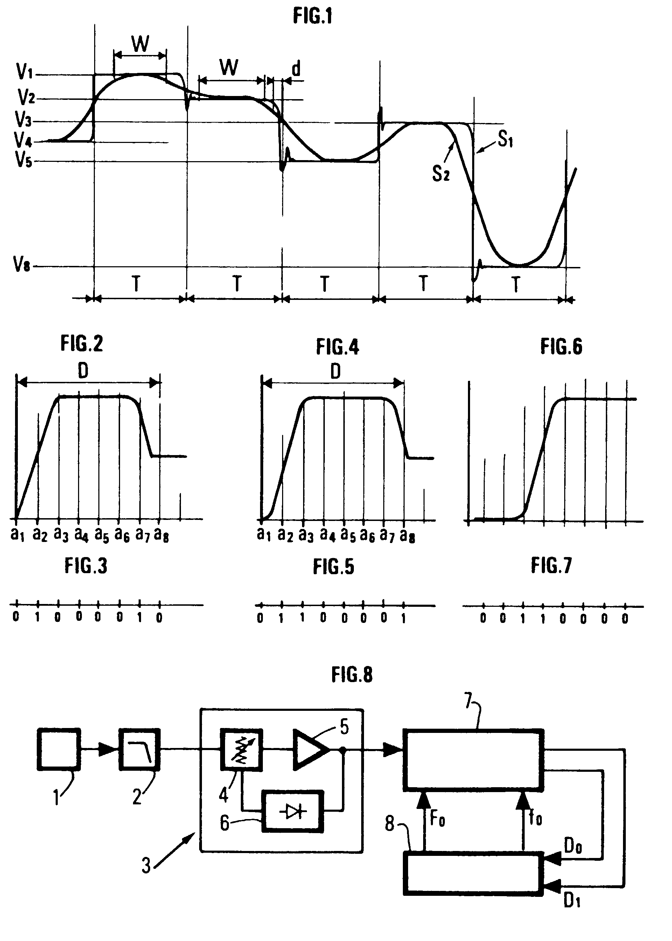

Des signaux S₁ ou S₂ tels que ceux montrés à la Fig.1, sont obtenus à partir d'un certain nombre de tensions électriques d'amplitude déterminées (huit ou seize par exemple). A chacun de ses paliers successifs N1...Np, correspond une combinaison particulière de signaux binaires qui peuvent être transmis simultanément sur une voie de transmission, comme il est bien connu des spécialistes. Ainsi, la détermination précise du niveau de chacun des paliers successifs du signal reçu sur cette voie, permet de restituer les signaux binaires transmis. La mesure de chacun des niveaux est effectuée durant une fenêtre W qui doit être bien centrée sur chacun des paliers de durée T pour éviter tout erreur dans la reconnaissance du niveau. Le centrage de chacune des fenêtres est effectué par une horloge locale et il ne peut être précis que si cette horloge est parfaitement calée sur celle qui a servi à rythmer la transmission des signaux sur la voie de transmission. Il faut donc détecter avec précision les instants de transition des signaux reçus même quand ils sont plus ou moins déformés en raison des imperfections de la voie de transmission et du dispositif d'émission comme le signal S₂.

Le procédé selon l'invention comporte tout d'abord l'échantillonnage des signaux codés reçus durant des intervalles de temps D incluant chacun au moins une transition de niveau des signaux codés reçus. Cet échantillonnage peut être fait à intervalles de temps plus ou moins long. Il est avantageux cependant de le réaliser de préférence à chacune des périodes successives du signal reçu pour une meilleure précision. La fréquence d'échantillonnage et la durée de l'intervalle D sont choisis pour obtenir un nombre déterminé d'échantillons distincts. Sur les Fig.2 et 4, on voit que l'intervalle de temps d'échantillonnage D est centré sur une période du signal et que 8 échantillons a1, a2, ..., a8 sont successivement prélevés durant cet intervalle.

Le procédé comporte ensuite une comparaison des amplitudes respectives des échantillons successifs prélevés de façon à déterminer leurs écarts. Si deux échantillons successifs ont même niveau (ou amplitude) on assigne à leur écart la valeur 0. Quand leurs niveaux sont différents, on assigne la valeur logique 1 à leur écart. A chaque ensemble d'échantillons, on peut donc associer un mot binaire de 8 bits. Sur les Fig.3 et 5, on voit que les mots numériques obtenus sont différents selon respectivement que le centrage de l'intervalle D par rapport à une portion de signal choisi est correct, et que l'un est désynchronisé par rapport à l'autre.

Chaque mot binaire obtenu est comparé à une liste de mots binaires prédéterminés. Chacun d'eux correspond à une configuration d'écart déterminée indicative de la qualité du centrage de la transition échantillonnée par rapport à l'intervalle de temps d.

Si par cette comparaison la configuration d'écarts des échantillons prélevés est reconnue bonne, cela signifie que l'intervalle de temps D a été bien centré et donc que l'horloge locale est bien synchrone avec le signal d'horloge reçu. Dans les autres cas, et selon la configuration, on procède à une correction de la fréquence et la phase de l'horloge locale de façon à la remettre parfaitement en phase avec le signal d'horloge reçu, comme on va le voir ci-après.

Le positionnement de la fenêtre d'échantillonnage par rapport au signal peut être quelconque. Elle peut être centrée sur les transitions du signal par exemple si l'on choisit de détecter les instants où elles se produisent ou encore sur les périodes du signal de façon à détecter les milieux des périodes successives.

Dans le dispositif de mise en oeuvre du procédé schématisé à la Fig. 8, les signaux codés issus de la voie de transmission employée 1, sont appliqués à un filtre passe-bas 2. L'affaiblissement des signaux filtrés dû à la transmission, est compensé par un ensemble de contrôle automatique de gain 3 comprenant un atténuateur variable 4, un amplificateur 5 et un détecteur d'enveloppe 6 connecté à la sortie de l'amplificateur 5, qui contrôle le facteur d'atténuation de l'atténuateur 4. Les signaux issus de l'ensemble 3 sont appliqués à un ensemble de régulation d'horloge 7 qui reçoit d'une horloge locale 8, des signaux d'horloge à des fréquences multiples les unes des autres, cet ensemble étant utilisé pour détecter les signaux d'horloge rythmant les signaux reçus, et en retour émettre des signaux de correction Dₒ et D₁ capables d'ajuster s'il y a lieu les fréquences de l'horloge locale 8 pour la resynchroniser.

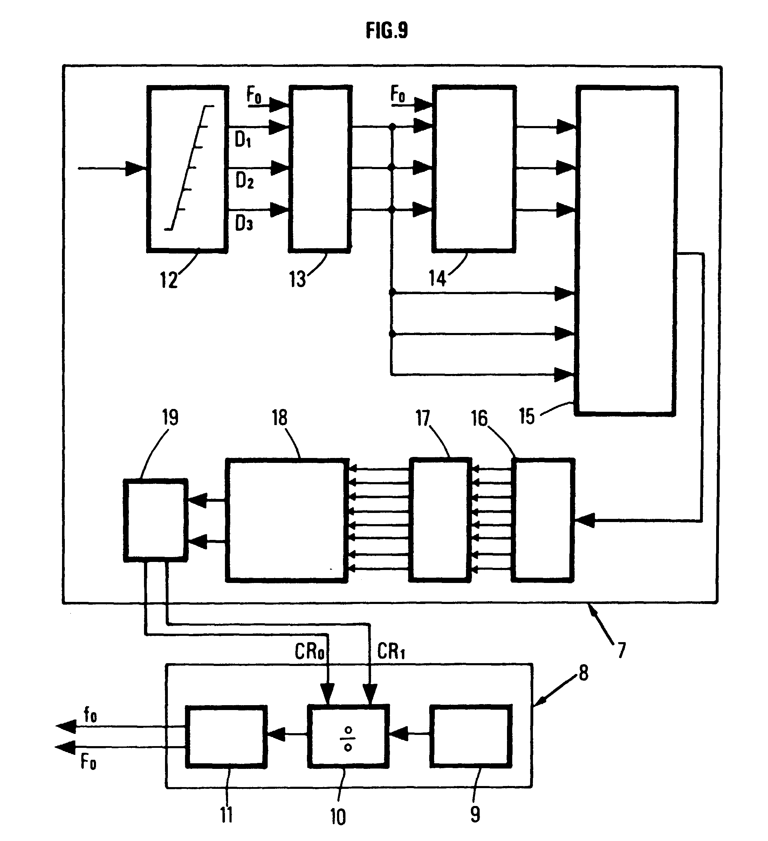

Cette horloge locale 8 comporte (Fig.9) un oscillateur à haute fréquence 9 et un ensemble de division 10 adapté à diviser la fréquence du signal de l'oscillateur 9 par plusieurs facteurs autour d'un facteur central. Dans la pratique on choisit par exemple 3 facteurs 7, 8 et 9, le facteur central étant ici 8. La fonction de cet ensemble de division 10 est aussi de sélectionner l'un des trois signaux résultant en fonction des signaux de correction CR₀ ou CR₁. L'horloge locale comporte aussi des éléments diviseurs 11 recevant les signaux sélectionnés et après division, produisant un signal d'horloge synchronisé H de fréquence fₒ et un autre signal de fréquence Fₒ=16.fₒ.

L'ensemble de régulation d'horloge 7 comporte (Fig.9) un moyen de comparaison 12 adapté à comparer en continu l'amplitude les signaux régulés issus de l'ensemble 3 avec 7 seuils d'amplitude croissante par exemple et délivrant en réponse des mots numériques à 3 bits Dₒ, D₁, D₂. Ce moyen de comparaison 12 est constitué avantageusement par un convertisseur analogique-numérique. Les mots numériques sont appliqués à deux registres 13, 14 à des instants d'échantillonnage successifs fixés par le signal d'horloge à la fréquence d'horloge Fₒ, les deux registres 13, 14 sont connectés en série de façon que les mots numériques passent successivement dans l'un et dans l'autre. Ces mots ou échantillons numérisés consécutifs sont comparés l'un à l'autre à la même fréquence par un moyen de comparaison 15 adapté à déterminer leur écart éventuel. Le comparateur délivre un 1 logique si deux quelconques échantillons numérisés ont des amplitudes différentes, et un 0 logique dans le cas contraire. Les valeurs binaires issues successivement du moyen de comparaison 15 sont transférées dans un registre à décalage 16 à 8 bits. Les mots de 8 bits formés, sont mémorisés dans un registre 17. Chacun de ces mots de 8 bits correspond à une configuration d'écarts représentative du signal échantillonné durant l'intervalle de temps D.

L'opération suivante qui consiste à reconnaître si cette configuration est acceptable, est effectuée dans un élément de mémorisation 18 du type PROM.

A cet effet les sorties en parallèle du registre 17 sont connectées aux entrées de la mémoire 18 affectées à la désignation de l'adresse. Chacun des mots numériques appliqué renvoie donc à une adresse de la mémoire 18 où est mémorisé un mot numérique à 2 bits CR₀ et CR₁ qui va servir à définir si une correction de la fréquence de l'horloge locale est nécessaire et le sens de cette correction éventuelle. Chaque mot de 8 bits issu du registre 17 représente à la fois une configuration type et l'adresse de la mémoire 18 où est inscrite la réponse appropriée qu'il faut apporter en fonction de la configuration obtenue. L'opération de comparaison est effectuée automatiquement en sortant de la mémoire à l'adresse désignée, les signaux représentatifs de la correction à effectuer.

Un certain nombre d'entre elles correspondent à des cas où le synchronisme entre la fréquence de l'horloge détectée sur la voie de transmission et l'horloge locale est considéré comme correct. D'autres correspondent à des cas où l'horloge locale est en avance sur le signal d'horloge transmis. D'autres configurations-types encore correspondent à des cas où l'horloge locale est en retard. On charge donc la mémoire PROM 18 de façon que le mot numérique CR₀, CR₁ lu à l'adresse défini par la configuration, indique la correction éventuelle à entreprendre. Pour CR₀=0 et CR₁=0 on ne fait aucune correction. Si CR₀=0 et CR₁=1 on décide d'avancer l'horloge locale et si au contraire CR₀=1 et CR=0 on décide de retarder l'horloge locale.

Les mots numériques CR₀, CR₁ issus de la mémoire 18 sont successivement chargés dans un registre 19 et appliqués à l'ensemble de division 10. Le registre 19 joue un rôle d'intégrateur. Il applique une correction moyenne calculée sur un nombre déterminé de cycles successifs de mesure et donc permet d'éviter les phénomènes dits de "jitter".

Si le signal de l'horloge locale s'avère être en avance par rapport à l'horloge transmise, l'application du signal correcteur CR₀, C_{R}¹ approprié entraîne la sélection d'un facteur de division plus élevé (8 en l'occurrence) pour l'ensemble de division 10, de manière à diminuer les fréquences fₒ et Fₒ produites par les éléments diviseurs 11. Un retard de l'horloge locale au contraire a pour effet une sélection du facteur de division inférieur (7 dans l'exemple) par l'ensemble de division 10 et une augmentation des mêmes fréquences.

La voie de transmission sur laquelle les signaux codés sont reçus peut être une ligne de transmission. Elle peut aussi être constituée par un canal radio constituée d'une porteuse modulée avec une modulation d'un type connu convenant pour les signaux à transmettre.

Dans l'exemple de réalisation décrit, on détecte d'éventuelles désynchronisations par des analyses de configurations d'écart comportant 8 échantillons prélevés sur un intervalle de temps correspondant sensiblement à une période de l'horloge transmise. On ne sortirait pas de l'invention toutefois en choisissant tout autre nombre suffisant pour faire une estimation précise du synchronisme entre l'horloge locale et le signal d'horloge reçu ni en modifiant la durée de l'intervalle de temps d'échantillonnage.

Dans le mode de réalisation décrit, le codage logique des écarts est effectué par le moyen de comparaison 15 sans pondération. On ne sortirait pas du cadre de l'invention si on procédait à une pondération des écarts, la valeur logique 1 n'étant attribuée à l'écart que s'il est supérieur à une valeur-seuil déterminée de façon à éliminer certaines fluctuations de niveau sans importance et sans incidence sur la qualité de la détection de synchronisme recherchée. A cet effet, un comparateur à seuil peut être interposé dans ce cas entre le moyen de comparaison 15 et le registre 16 (Fig. 9).

On ne sortirait pas non plus de l'invention en remplaçant l'horloge locale décrite avec ses éléments diviseurs de fréquence, par une horloge d'un autre type pouvant être resynchronisée par des signaux de correction obtenus par le procédé décrit.

Pour obtenir plus de finesse dans la correction de l'horloge locale on pourra augmenter la fréquence de l'oscillateur 9 et en même temps les facteurs de division appliqués par l'ensemble de division 10.

## Revendications

1. Procédé pour restituer à partir de signaux captés sur une voie de transmission, un signal d'horloge (H) rythmant la transmission sur celle-ci de données numérisées et codées, par une détermination des instants de transition successifs où les signaux codés changent de niveaux d'amplitude, de façon à mettre en phase une horloge locale, caractérisé en ce qu'il comporte la réalisation de cycles comprenant
- un échantillonnage des signaux codés reçus durant des intervalles de temps (D) incluant chacun au moins une transition entre deux niveaux différents des signaux codés reçus et à une fréquence (Fₒ) suffisante imposée par l'horloge locale (8) et très supérieure à celle dudit signal d'horloge pour disposer d'une pluralité d'échantillons (a₁-a₈) successifs, des signaux reçus;
- une détermination des écarts de niveau entre tous les échantillons successifs obtenus;
- une comparaison de l'ensemble desdits écarts de niveau obtenus au cours de chaque intervalles de temps (D) et une liste de mots binaires prédéterminés, chacun de ces mots binaires correspondant à une configuration-type d'écarts déterminée indicative de la qualité du centrage de la transition échantillonnée par rapport à l'intervalle de temps (D), et si l'ensemble des écarts ne correspond pas à une configuration d'écarts de cette liste;
- une correction (CR₀, CR₁) de la fréquence ou de la phase de l'horloge locale, de façon à rétablir une similitude avec une configuration d'écarts de la liste, lors d'une transition ultérieure.

2. Procédé selon la revendication 1, caractérisé en ce que ladite étape de comparaison de l'ensemble des écarts avec la liste de configuration d'écarts est effectuée en associant directement à chaque ensemble d'écarts de niveau obtenu, des signaux (CR₀, CR₁) indicatifs de la correction éventuelle à apporter à la fréquence ou la phase de l'horloge locale.

3. Procédé selon la revendication 1 ou 2, caractérisé en ce qu'il comporte un codage binaire des écarts.

4. Procédé selon la revendication 1 ou 2, caractérisé en ce qu'il comporte un codage binaire des écarts après comparaison avec une amplitude seuil.

5. Dispositif pour restituer un signal d'horloge rythmant la transmission de signaux captés et mettre en phase une horloge locale (8), en accord avec le procédé selon la revendication 1 ou 2, comportant des moyens (2, 3) d'adaptation du niveau des signaux reçus sur une voie de transmission, caractérisé en ce qu'il comporte des moyens (12) d'échantillonnage des signaux reçus durant des intervalles de temps incluant chacun au moins une transition entre des niveaux différents des signaux codés reçus à une fréquence suffisante imposée par l'horloge locale et très supérieure à celle du signal d'horloge, pour disposer d'une pluralité d'échantillons successifs des signaux reçus, des moyens (13-17) pour déterminer les écarts de niveau les uns par rapport aux autres des échantillons successifs prélevés durant chacun desdits intervalles de temps et constituer avec chacun d'eux un ensemble de valeurs d'écart, et des moyens de comparaison de chaque ensemble d'écarts de niveau avec une liste de mots binaires prédéterminés indicative de la qualité de centrage de la transition échantillonnée, comprenant des moyens de mémorisation (18, 19) pour associer à chaque ensemble de valeurs d'écart obtenu, des signaux indicatifs de la correction à appliquer à l'horloge locale pour rétablir la synchronisation avec ledit signal d'horloge.

6. Dispositif selon la revendication 5, caractérisé en ce que les moyens d'échantillonnage (12) sont adaptés à délivrer des mots numériques, lesdits moyens (13-17) pour déterminer les écarts, comportent deux registres (13, 14) adaptés à contenir les mots numériques successifs, des moyens (15) de comparaison deux à deux des mots numériques successifs contenus dans les deux registres (13, 14), et des moyens de mémorisation des écarts (16, 17) pour contenir lesdits ensembles d'écarts.

7. Dispositif selon la revendication 5, caractérisé en ce que les moyens de comparaison (15) sont adaptés à comparer chaque écart à un écart seuil.

8. Dispositif selon la revendication 6, caractérisé en ce que les moyens de mémorisation (18, 19) comportent un organe de mémorisation (18) pour des mots numériques (CR₀, CR₁) représentatifs de corrections à appliquer à l'horloge locale (8), ledit organe de mémorisation (18) étant pourvu d'entrées d'adresse reliées auxdits moyens de mémorisation des écarts (17), et en ce que l'horloge locale comporte un oscillateur à haute fréquence (9), des premiers moyens diviseurs de fréquence (10) pour diviser la fréquence du signal de l'oscillateur par plusieurs facteurs différents autour d'une valeur centrale, et sélectionner l'un des facteurs en fonction desdits signaux de correction (CR₀, CR₁) reçu desdits moyens de mémorisation (18, 19) et des deuxièmes moyens diviseurs connectés aux premiers moyens diviseurs pour engendrer un premier signal à la même fréquence (Fₒ) que le signal d'horloge reçu ainsi qu'un signal de synchronisation à une fréquence (Fₒ) multiple de celle du premier signal.

9. Dispositif selon l'une des revendications 5 à 8, caractérisé en ce que les moyens d'échantillonnage (12) comportent un convertisseur analogique-numérique.

10. Dispositif selon la revendication précédente, caractérisé en ce que la Fréquence (Fo) dudit signal de synchronisation est choisie pour obtenir un nombre 2ⁿ d'échantillons durant chacun desdits intervalles de temps et les moyens d'échantillonnage (12) sont adaptés à délivrer des mots numériques de n bits pour chacun d'eux.

11. Dispositif selon la revendication 8, caractérisé en ce que lesdits moyens de mémorisation comportent des moyens d'intégration (19) pour l'application d'une correction moyenne établie sur un nombre déterminé de cycles successifs.

## Patentansprüche

1. Verfahren zur von über einen Übertragungsweg aufgenommenen Signalen ausgehenden Wiederherstellung eines die Übertragung von digitalisierten und codierten Daten über diesen taktenden Taktsignals (H) durch eine Ermittlung der aufeinanderfolgenden Übergangszeitpunkte, bei denen die codierten Signale Amplitudenpegel verändern, um einen lokalen Taktgeber zu synchronisieren,
dadurch gekennzeichnet, daß
es die Durchführung von Zyklen enthält, die umfassen
- eine Abtastung der empfangenen codierten Signale während Zeitintervallen (D), die jeweils wenigstens einen Übergang zwischen zwei unterschiedlichen Pegeln der empfangenen codierten Signale einschließen, mit einer ausreichenden Frequenz (F₀), die durch den lokalen Taktgeber (8) auferlegt wird und viel höher liegt als diejenige des Taktgebersignals, um über eine Vielzahl von aufeinanderfolgenden Abtastungen (a₁-a₈) der empfangenen Signale zu verfügen;
- eine Ermittlung der Pegelabweichungen zwischen allen erhaltenen aufeinanderfolgenden Abtastungen;
- ein Vergleich der Gruppe der im Verlaufe jedes Zeitintervalls (D) erhaltenen Pegelabweichungen mit einer Liste von festgelegten binären Wörtern, wobei jedes dieser binären Wörter einem bestimmten Konfigurationstyp von Abweichungen entspricht, der kennzeichnend hinsichtlich der Qualität der Zentrierung des abgetasteten Übergangs in bezug auf das Zeitintervall (D) ist, und wenn die Gruppe der Abweichungen keiner Konfiguration der Abstände dieser Liste entspricht:
- eine Korrektur (CR₀, CR₁) der Frequenz oder der Phase des lokalen Taktgebers, um eine Ähnlichkeit mit einer Konfiguration von Abweichungen der Liste bei einem späteren Übergang wiederherzustellen.

2. Verfahren nach Anspruch 1,
dadurch gekennzeichnet, daß
der Schritt des Vergleichens der Gruppe der Abweichungen mit der Konfigurationsliste der Abweichungen durchgeführt wird, indem jeder erhaltenen Gruppe von Pegelabweichungen Signale (CR₀, CR₁) zugeordnet werden, die hinsichtlich der möglicherweise bei der Frequenz oder der Phase des lokalen Taktgebers zu erbringenden Korrektur kennzeichnend sind.

3. Verfahren nach Anspruch 1 oder 2,
dadurch gekennzeichnet, daß
es eine binäre Codierung der Abweichungen umfaßt.

4. Verfahren nach Anspruch 1 oder 2,
dadurch gekennzeichnet, daß
es eine binäre Codierung der Abweichungen nach Vergleich mit einer Schwellenamplitude enthält.

5. Einrichtung zur Wiederherstellung eines die Übertragung von aufgenommenen Signalen taktenden Taktgebersignals und zur Synchronisierung eines lokalen Taktgebers (8) im Einklang mit dem Verfahren nach Anspruch 1 oder 2 unter Verwendung von Mitteln (2, 3) zur Anpassung des Pegels der über einen Übertragungsweg empfangenen Signale,
dadurch gekennzeichnet, daß
sie enthält:
Mittel (12) zum Abtasten der empfangenen Signale während der Zeitintervalle, die jeweils mindestens einen Übergang zwischen verschiedenen Pegeln der empfangenen codierten Signale einschließen, mit einer ausreichenden, durch den Taktgeber auferlegten Frequenz, die viel höher als diejenige des Taktgebersignals ist, um über eine Vielzahl von aufeinanderfolgenden Abtastungen empfangener Signale zu verfügen,
Mittel (13-17) zur Ermittlung der Pegelabweichungen der einen in bezug auf die anderen der während jedes der Zeitintervalle abgegriffenen aufeinanderfolgenden Abtastungen und zur Bildung einer Gruppe von Abweichungswerten mit jeder von diesen, und
Mittel zum Vergleichen jeder Gruppe von Pegelabweichungen mit einer Liste festgelegter binärer Wörter, die hinsichtlich der Qualität der Zentrierung des abgetasteten Übergangs kennzeichnend ist, wobei Speichermittel (18, 19) enthalten sind, um jeder Gruppe von erhaltenen Abweichungswerten Signale zuzuordnen, die für die dem lokalen Taktgeber zuzuführende Korrektur zur Wiederherstellung der Synchronisierung mit dem Taktgebersignal kennzeichnend sind.

6. Einrichtung nach Anspruch 5,
dadurch gekennzeichnet, daß
die Abtastmittel (12) zum Abgeben digitaler Wörter angepaßt sind, wobei die Mittel (13-17) zur Ermittlung der Abweichungen zwei zur Aufnahme der aufeinanderfolgenden digitalen Wörter angepaßte Register (13, 14), Mittel (15) zum Vergleichen von jeweils zwei mit zwei der aufeinanderfolgenden digitalen Wörter, die in den beiden Registern (13, 14) enthalten sind, und Mittel (16, 17) zur Speicherung der Abweichungen enthalten, um die Gruppen von Abweichungen aufzunehmen.

7. Einrichtung nach Anspruch 5,
dadurch gekennzeichnet, daß
die Vergleichsmittel (15) zum Vergleichen jeder Abweichung mit einer Schwellenabweichung angepaßt sind.

8. Einrichtung nach Anspruch 6,
dadurch gekennzeichnet, daß
die Speichermittel (18, 19) ein Speicherorgan (18) für die digitalen Wörter (CR₀, CR₁) aufweisen, die für die dem lokalen Taktgeber (8) zuzuführenden Korrekturen repräsentativ sind, wobei das Speicherorgan (18) mit Adreßeingängen versehen ist, die mit den Mitteln (17) zur Speicherung der Abweichungen verbunden sind, und daß der lokale Taktgeber einen Hochfrequenz-Oszillator (9), erste Frequenzteilermittel (10) zur Teilung der Signalfrequenz des Oszillators durch mehrere verschiedene Faktoren um einen mittleren Wert herum und zur Auswahl eines der Faktoren in Abhängigkeit von den von den Speichermitteln (18, 19) empfangenen Korrektursignalen (CR₀, CR₁) und zweite, mit den ersten Teilermitteln verbundene Teilermittel zur Erzeugung eines ersten Signals mit der gleichen Frequenz (F₀) wie beim empfangenen Taktgebersignal sowie eines Synchronisationssignals mit einer Frequenz (F₀), die ein Vielfaches von derjenigen des ersten Signals ist, enthält.

9. Einrichtung nach einem der Ansprüche 5 bis 8,
dadurch gekennzeichnet, daß
die Abtastmittel (12) einen Analog/Digital-Wandler aufweisen.

10. Einrichtung nach einem der vorhergehenden Ansprüche,
dadurch gekennzeichnet, daß
die Frequenz (F₀) des Synchronisierungssignals gewählt wird, um eine Anzahl 2ⁿ von Abtastungen während jedes Zeitintervalls zu erhalten, und die Abtastmittel (12) zur Abgabe von digitalen Wörtern von n Bits für jedes von ihnen angepaßt sind.

11. Einrichtung nach Anspruch 8,
dadurch gekennzeichnet, daß
die Speichermittel Integrationsmittel (19) zur Anwendung einer mittleren Korrektur aufweisen, die über eine Anzahl von aufeinanderfolgenden Zyklen eingerichtet ist.

## Claims

1. A method for restoring from signals picked up on a transmission channel a clock signal(H) setting the transmission rate thereon of digitised and coded data by determining in succession instants of transition at which the coded signals change amplitude levels so as to set a local clock in phase, characterised in that it consists in running the following cycles
- sampling the coded signals received during time intervals (D), each of which includes at least one transition between two different levels of the signals received, at an appropriate frequency (Fₒ) set by the local clock (8) and very much higher than that of said clock signal in order to produce a plurality of successive samples (aᵢ-a₈) of the signals received;
- determining the shifts in level between all the successive samples obtained;
- comparing all said level shifts obtained during each time interval (D) and a list of predetermined binary words, each of these binary words corresponding to a given standard shift pattern indicative of the centring quality of the sampled transition relative to the time interval (D) and, if the set of shifts does not correspond to a pattern of shifts from this list,
- correcting (CR₀, CR₁) the frequency or the phase of the local clock in order to restore similarity to a shift pattern from the list during a subsequent transition.

2. A method as claimed in claim 1, characterised in that said step of comparing the set of shifts with the list of shift patterns is performed by directly associating signals (CR₀, CR₁) indicative of any correction to be applied to the frequency or the phase of the local clock with each set of level shifts obtained.

3. A method as claimed in claim 1 or 2, characterised it that it incorporates a binary coding of the shifts.

4. A method as claimed in claim 1 or 2, characterised in that it incorporates a binary coding of the shifts after comparison with a threshold amplitude.

5. A device for restoring a clock signal setting the transmission rate of signals picked up and for phasing a local clock (8) using the method as claimed in claim 1 or 2, having means (2, 3) for adjusting the level of the signals received on a transmission channel, characterised in that it has means (12) for sampling signals received during time intervals, each of which includes at least one transition between the different levels of the coded signals received at an appropriate frequency set by the local clock and very much higher than that of the clock signal in order to produce a plurality of successive samples of the signals received, means (13-17) for determining the relative shifts in level of the successive samples taken during each of said time intervals and forming a set of shift values with each of them, and means for comparing each set of level shifts with a list of predetermined binary words indicative of the centring quality of the sampled transition, incorporating storage means (18, 19) for associating with each set of shift values obtained signals which are indicative of the correction to be applied to the local clock in order to restore synchronisation with said clock signal.

6. A device as claimed in claim 5, characterised in that the sampling means (12) are set up to issue digital words, said means (13, 17) for determining the shifts have two registers (13, 14) designed to contain the successive digital words, means (15) compare the successive digital words contained in the two registers (13, 14) two by two and shift storage means (16, 17) can contain said sets of shifts.

7. A device as claimed in claim 5, characterised in that the comparison means (15) are set up to compare each shift with a threshold shift.

8. A device as claimed in claim 6, characterised in that the storage means (18, 19) have a storage element (18) for digital words (CR₀, CR₁) representative of corrections to be applied to the local clock (8), said storage element (18) being provided with address inputs connected to said shift storage means (17) and the local clock has a high-frequency oscillator (9), first frequency divider means (10) for dividing the frequency of the oscillator signal by several different factors around a central value and selecting one of the factors on the basis of said correction signals (CR₀, CR₁) received from said storage means (18, 19) and second divider means connected to the first divider means for generating a first signal at the same frequency (fₒ) as the clock signal received as well as a synchronisation signal at a frequency (Fₒ) which is a multiple of that of the first signal.

9. A device as claimed in one of claims 5 to 8, characterised in that the sampling means (12) incorporate an analogue-to-digital convertor.

10. A device as claimed in the preceding claim, characterised in that the frequency (Fₒ) of said synchronisation signal is chosen so as to produce a number 2ⁿ of samples during each of said time intervals and sampling means (12) are set up to issue digital words of n bits for each of them.

11. A device as claimed in claim 8, characterised in that said storage means have integration means (19) for applying a mean correction established over a given number of successive cycles.
